Europäisches Patentamt

European Patent Office

Office européen des brevets

(11) Numéro de publication: **0 085 619**
**A2**

# (12) DEMANDE DE BREVET EUROPEEN

(21) Numéro de dépôt: **83400195.0**

(22) Date de dépôt: **28.01.83**

(51) Int. Cl.³: **H 02 K 19/26**

(30) Priorité: 29.01.82 FR 8201612

(43) Date de publication de la demande:
10.08.83 Bulletin 83/32

(84) Etats contractants désignés:
DE FR GB

(71) Demandeur: MOTEURS LEROY-SOMER (Société
Anonyme française)
Bld. Marcellin-Leroy
F-16015 AngoulemeCedex(FR)

(72) Inventeur: Fauvet, Jean-Pierre
353, rue de Marcilly
F-45590 St Cyr En Val(FR)

(74) Mandataire: Bouju, André
38 Avenue de la Grande Armée
F-75017 Paris(FR)

(54) Alternateur monophasé.

(57) L'alternateur monophasé comprend un inducteur tournant muni d'au moins un bobinage (4), des moyens pour alimenter le bobinage de l'inducteur en courant d'excitation, un stator comportant au moins un enroulement principal (1).

Il comporte un circuit magnétique pour l'inducteur qui est feuilleté et forme une paire de pôles (14a, 14b) initialement magnétisés, une diode (5) qui referme le circuit du bobinage de l'inducteur (4) dans un sens correspondant à la magnétisation initiale des pôles (14a, 14b) et au stator un enroulement auxiliaire (2) dont l'axe magnétique fait un angle avec celui de l'enroulement principal (1) et qui est fermé sur une charge partiellement capacitive (3).

Utilisation notamment dans les groupes électrogènes et l'automobile.

FIG.1

## "Alternateur monophasé"

Les alternateurs comportent habituellement un inducteur tournant encore appelé roue polaire et un induit fixe ou stator.

On connaît divers moyens pour alimenter l'inducteur en courant sensiblement continu :

- On a utilisé des dynamos montées ou non sur l'arbre de l'alternateur, le courant continu étant transmis à l'inducteur tournant par un ensemble de bagues et de balais.

- On a encore utilisé des ensembles redresseurs pour lesquels la connexion à l'inducteur requiert les mêmes moyens que précédemment.

- Enfin, pour s'affranchir de la sujétion des bagues et balais, on a encore prévu de monter sur le même arbre que l'alternateur un générateur synchrone du type à inducteur fixe et à induit tournant dont le courant alternatif de sortie est redressé par un ensemble de redresseurs directement montés sur l'arbre de la machine (alternateur de type "brushless").

De tels systèmes présentent l'inconvénient que les bagues et balais s'usent, s'oxydent dans les atmosphères corrosives pour les machines à bagues, le défaut d'être coûteux et encombrants pour les machines à diodes tournantes.

Par ailleurs, ces systèmes nécessitent obligatoirement un dispositif de régulation car ils n'assurent pas "naturellement" la régulation de la tension aux bornes de l'alternateur en fonction de la charge.

Cette tension est fonction à la fois de l'importance de la charge et de sa nature : ohmique, inductive, les charges les plus courantes étant du type ohmique - inductive  et il est nécessaire de mettre en oeuvre des dispositifs de régulation du courant d'excitation pour corriger les effets des variations de la charge. Ces dispositifs

2

électrotechniques ou électroniques de régulation du courant d'excitation sont complexes et coûteux, consomment de l'énergie et abaissent le rendement global du système.

Le fonctionnement des alternateurs monophasés présentent par ailleurs de par sa nature même l'obligation de mettre en place sur les pôles de l'inducteur des circuits amortisseurs qui sont constitués par des barres de cuivre de résistance faible mises en court-circuit à leurs extrémités (de manière analogue aux cages d'écureuil des moteurs asynchrones).

Ces circuits amortisseurs sont nécessaires pour éviter la formation des harmoniques impairs résultant de l'action du champ tournant inverse sur l'inducteur et pour limiter les pertes dans le fer.

La présente invention vise à pallier aux inconvénients mentionnés ci-dessus et en particulier à proposer un alternateur monophasé du type à inducteur tournant et à induit fixe ne nécessitant pas de source d'énergie en courant continu pour son excitation, pas de circuits amortisseurs et qui de plus s'auto-amorce et s'auto-régule en tension en fonction de la charge même dans le cas où celle-ci est inductive.

Un autre but de l'invention est d'améliorer le rendement, de réduire l'échauffement et le coût des alternateurs monophasés pour une puissance donnée.

Suivant l'invention, un alternateur monophasé comprend un inducteur tournant muni d'un bobinage, des moyens pour alimenter le bobinage de l'inducteur en courant d'excitation, un stator comportant au moins un enroulement principal. Il est caractérisé en ce que le circuit magnétique de l'inducteur comprend des tôles minces en matériau ferro-magnétique, isolées, serrées les unes contre les autres et bloquées sur l'arbre de l'inducteur pour former suivant des directions radiales par rapport

3

audit arbre, au moins une paire de pôles que l'on a initialement magnétisés pour en faire un pôle Nord et un pôle Sud , en ce qu'entre les bornes du bobinage de l'inducteur est connecté un élément assurant la conduction uniquement dans le sens procurant un champ correspondant à la magnétisation initiale et en ce que les moyens pour alimenter l'inducteur en courant d'excitation comprennent un enroulement statorique auxiliaire dont l'axe magnétique fait un angle avec celui de l'enroulement principal et qui est fermé sur une charge au moins partiellement capacitive.

Le courant créé lors du démarrage de l'alternateur dans l'enroulement statorique auxiliaire à partir du magnétisme initial de l'inducteur intervient à la fois pour renforcer directement le magnétisme initial et pour induire dans le bobinage de l'inducteur un courant de pulsation double qui est redressé par l'élément de conduction unidirectionnel et qui peut donc agir à son tour pour renforcer le champ magnétique de l'inducteur. On a donc bien auto-amorçage puis entretien de l'alternateur sans avoir besoin d'une génératrice de courant continu extérieure.

Selon un mode de réalisation avantageux de l'invention, la réactance de la charge au moins partiellement capacitive est un condensateur et elle est supérieure à la réactance synchrone totale de l'enroulement aux bornes duquel elle est connectée.

Selon un mode de réalisation préféré de l'invention les axes desdits enroulements statoriques sont sensiblement perpendiculaires.

En plaçant ainsi les enroulements statoriques dans une position aussi voisine que possible de la quadrature magnétique, on recueille au maximum les effets du champ inverse.

4

D'autres particularités de l'invention résulteront encore de la description qui va suivre.

Aux dessins annexés donnés à titre d'exemples non limitatifs :

- la figure 1 représente une vue en coupe schématique d'un alternateur monophasé selon l'invention ;

- la figure 2 représente le schéma électrique symbolique de l'alternateur de la figure 1 ;

- la figure 3 représente une variante de construction de la roue polaire pour un alternateur à trois paires de pôles ;

- les figures 4 et 5 représentent des variantes de construction de la roue polaire et des bobinages inducteurs ;

- la figure 6 représente une variante de réalisation des entrefers entre la roue polaire et le stator.

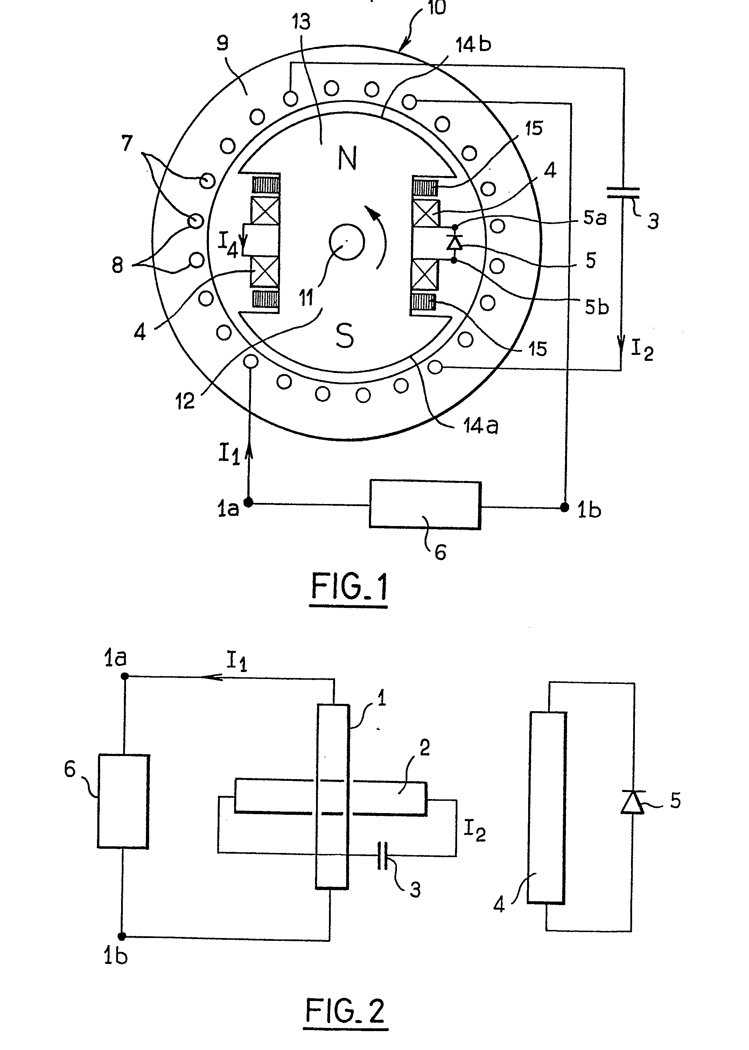

A la figure 1 on a représenté un alternateur monophasé 10 à une paire de pôles comportant un enroulement statorique 1 appelé ci-après "enroulement principal" et qui délivre à des bornes 1a, 1b la puissance de la machine à une charge 6. Le stator comporte un second enroulement 2 appelé enroulement auxiliaire qui est refermé sur un condensateur 3 de quelques µF dont la réactance capacitive est supérieure à la réactance synchrone de l'enroulement 2 . Les conducteurs 7 des enroulements statoriques 1 et 2 sont mis en place dans des encoches 8 du stator 9 qui est ici l'induit.

L'alternateur 10 comporte un arbre 11 auquel est fixé l'inducteur 12 et qui est entraîné, en rotation de façon connue par un système moteur qui n'est pas représenté.

Dans l'exemple représenté le circuit magnétique de la roue polaire 12 est du type à pôles saillants à une seule paire de pôles. Ce circuit est constitué par des tôles magnétiques minces 13 qui forment les épanouisse-

5

ments polaires 14<u>a</u>, 14<u>b</u>. Ces tôles 13 sont empilées les unes sur les autres isolées les unes des autres électriquement et bloquées entre elles par un montage connu en soi, non représenté. Elles forment ainsi la carcasse du bobinage de l'inducteur et forment les pôles 14<u>a</u>, 14<u>b</u> suivant des directions radiales par rapport à l'arbre 11.

Le circuit d'excitation de la roue polaire est constitué par deux bobines 4 connectées en série, montées selon le même axe géométrique et symétriquement relativement à un plan axial de la machine autour de la partie du circuit magnétique comprise entre les épanouissements polaires 14<u>a</u>, 14<u>b</u>. Le raccordement de ces bobines est effectué de manière à ce que les ampères-tours d'excitation s'ajoutent.

Les bobines 4 présentent des bornes 5<u>a</u>, 5<u>b</u>. Entre ces bornes est raccordée une diode 5 dont l'anode est reliée à la borne 5<u>a</u>. De manière connue, la vitesse en tours par minute est donnée par la formule :

$n = 60 \, f/p$ où f est la fréquence de la tension induite et p le nombre de paires de pôles de la roue polaire. On voit dans l'exemple décrit qui comporte 2 pôles (donc p = 1) qu'il faudra entraîner l'alternateur à 3 000 tours/minute pour obtenir une tension à 50 périodes par seconde.

Il faut signaler encore que lors de la fabrication, la roue polaire a été magnétisée en envoyant un courant dans les bobines 4 de façon à ce que le champ magnétique initial crée, par exemple, des pôles Nord et Sud comme indiqué sur la figure 1. Ainsi, tant que la machine ne sera pas démontée, elle restera magnétisée.

Par ailleurs, le sens du courant $I_4$ permis par la diode 5 est tel que le champ magnétique créé par les bobines 4 dans la roue polaire est dirigé dans le même sens que le champ magnétique initial

0085619

6

mentionné ci-dessus.

On va à présent décrire le fonctionnement du présent alternateur en supposant tout d'abord qu'il fonctionne à vide, c'est-à-dire qu'aucune charge 6 n'est connectée aux bornes 1a, 1b de l'enroulement principal.

Dès que la roue polaire est entraînée en rotation par exemple à une vitesse V dans le sens indiqué par la flèche sur la figure 1, l'induction initiale de la roue polaire créé un petit flux qui vient couper les conducteurs 7 des enroulements 1 et 2 et induit dans ces enroulements une tension de quelques volts. Un courant $I_2$ va se refermer dans l'enroulement auxiliaire 2 par le condensateur 3 (au début $I_2$ est égal à la tension rémanente créée par le champ initial divisée par l'impédance du condensateur 3). Ce courant $I_2$ circulant dans l'enroulement 2 créé un champ magnétique alternatif dont on sait qu'il peut être considéré comme la résultante de deux champs tournants en sens contraire et de même amplitude. Le champ direct de même vitesse V que la roue polaire qui le crée exerce une action magnétisante sur le flux émis par la roue polaire étant donné que du fait de la forte valeur du condensateur 3 la charge de l'enroulement 2 est principalement capacitive. Le champ inverse tourne quant à lui dans le sens inverse de la roue polaire et il coupe donc les conducteurs des bobines 4 avec une vitesse égale à 2V pour y induire une tension qui va entraîner la production du courant $I_4$ qui ne comporte que des demi-alternances du fait de la présence de la diode 5 dans le circuit desdites bobines 4.

Ce courant $I_4$ vient renforcer le flux fourni par la roue polaire et on voit bien que le phénomène se produit jusqu'à ce que la machine atteigne sa vitesse nominale.

Les tensions induites dans les enroulements 2 et

7

dans les bobines 4 sont alors limitées - par construction - par la saturation du fer de la machine, stator et
rotor inclus.

L'alternateur délivre alors sa tension nominale à
vide sous l'influence du flux résultant créé par la roue
polaire et la réaction d'induit provoquée par le champ
tournant direct. Ainsi, grâce à l'enroulement 2 fermé
par le condensateur 3 et à la diode 5 redressant le
courant induit dans les bobines 4, l'alternateur s'auto-
armorce et s'auto-excite. On remarquera que ce fonctionnement ne nécessite pas de circuits amortisseurs mais
par contre la mise en oeuvre d'un rotor feuilleté puisque
à vitesse nominale le rotor est balayé par un champ
magnétique de fréquence 2f soit 100 périodes par sec. en Europe

Dès que l'enroulement principal 1 est relié à une
charge 6 par ses bornes $1\underline{a}$ et $1\underline{b}$, il est traversé par un
courant de charge $I_1$ qui produit à son tour un champ
magnétique alternatif que l'on peut comme précédemment
décomposer en deux champs tournants opposés.

Dans un alternateur classique, la tension aux bornes diminue en fonction de la charge du fait d'une part
de la chute interne dans l'enroulement 1 et d'autre part
de la réaction d'induit résultant de la composante directe du champ créé par le courant $I_1$, réaction qui est démagnétisante étant donné que la charge 6 est en général
du type ohmique - inductif.

Dans l'alternateur selon l'invention, le champ inverse qui est proportionnel au courant $I_1$ induit dans
les bobines 4 une tension qui augmente avec la charge et
qui augmente donc le champ magnétique créé par la roue
polaire. Cette augmentation augmente le flux total dans
l'alternateur ce qui entraîne à son tour une augmentation
de la tension induite dans l'enroulement 1. Parallèlement
l'augmentation du flux magnétique de l'alternateur entraîne également l'augmentation de la tension aux bornes de l'enroulement 2 donc l'augmentation du courant $I_2$ et par suite un accroissement du champ magnétique correspondant.

On voit donc que l'augmentation de la charge et la diminuation du cos $\gamma$ pour des charges 6 ohmiques-inductives conduisent à un renforcement du courant d'excitation et de la puissance magnétisante et par suite au maintien de la tension aux bornes de la charge. Il en résulte que l'alternateur effectue automatiquement la régulation de sa propre tension avec une précision mesurée de l'ordre de quelques %.

De même, le rendement de l'alternateur selon l'invention est supérieur au rendement des alternateurs connus de même puissance nominale ; en effet les pertes dans le circuit d'excitation sont limitées aux pertes dans la diode de redressement 5 puisqu'il n'existe ni bague, ni balai, ni collecteur, ni génératrice auxiliaire.

Enfin, les essais conduits au laboratoire ont montré qu'en régime normal les conducteurs de l'enroulement principal 1 chauffent nettement moins que les conducteurs statoriques des alternateurs connus utilisant des moyens divers de régulation de l'excitation, bien entendu toujours à puissance nominale identique.

On a rassemblé à titre d'exemple dans le tableau ci-après, les paramètres les plus significatifs relatifs à certains types d'alternateurs connus, repérés a, b, c, d (colonne 1) pour comparaison avec le présent alternateur repéré e. Les alternateurs a, b, c, d présentent respectivement des systèmes d'excitation shunt, compound, shunt et série, par régulateur électronique.

| | échauffement | variation en pourcentage de la tension à vide | rendement au 3/4 de la charge a cos $\phi = 1$ | surcharge par rapport à $I_1$ nominal. | coût |
|---|---|---|---|---|---|
| a | 90° C | ± 10 % | 0,75 | 15 % | 2,8 |
| b | 90° C | ± 6 % | 0,73 | 100 % | 4,8 |
| c | 90° C | ± 6 % | 0,74 | 100 % | 2,8 |
| d | 90° C | ± 2 % | 0,74 | 100 % | 10 |
| e | 75° C | ± 3 % | 0,76 | 20 % | 1 |

Les paramètres pris en considération pour la comparaison sont respectivement l'échauffement atteint en régime normal par les conducteurs de l'induit avec le courant $I_1$ nominal (2è colonne), la variation en pourcentage de la tension à vide (3è colonne), le rendement à 75 % de la charge avec un cos $\phi$ égal à un (4è colonne), le pourcentage de surcharge par rapport à $I_1$ nominal (5è colonne) et le coût unitaire (6è colonne) pour la composition duquel on a pris par convention le prix du présent alternateur comme égal à 1.

En conclusion on voit que le présent alternateur n'a pas de circuits amortisseurs, ne nécessite pas de source de courant conitnu pour l'alimentation du circuit d'excitation de l'inducteur (et donc point n'est besoin de balais, de collecteurs, d'installations de redressement, de générateurs auxiliaires, etc..). Il s'auto-amorce, auto-régule sa tension avec l'augmentation de la charge (même si cette charge est fortement déwattée) ; il supporte des surcharges notables et offre par rapport

10

aux alternateurs connus de même puissance nominale un
rendement supérieur, un échauffement moindre et un coût
particulièrement intéressant. De plus la suppression des
bagues et balais ainsi que l'excitatrice permet de réduire
sensiblement l'encombrement en longueur de l'alternateur
ce qui est très intéressant dans nombre d'applications,
par exemple la fabrication de petits groupes électrogènes. On
notera enfin que la construction et la maintenance de
ces alternateurs sont très simplifiées et que leur fiabilité s'en trouve sensiblement accrue.

On donne ci-après un certain nombre de paramètres
techniques de construction de ces alternateurs.

Le condensateur 3 est choisi de façon à obtenir
une tension en charge sensiblement égale à la tension
à vide. On choisit pour cela une valeur de l'ordre de
2 $\mu$F par KVA pour un alternateur de tension 220 volts.

La valeur de la capacité 3 à mettre en place aux
bornes de l'enroulement auxiliaire doit sensiblement être
inversement proportionnelle au carré de la tension de
l'alternateur.

Si au contraire on souhaite donner du statisme
de tension à la machine, c'est-à-dire obtenir une certaine chute de la tension en fonction de la charge, on
peut placer quelques spires en court-circuit à côté
des bobines 4 comme cela est représenté en 15 à la figure
1. On pourrait encore court-circuiter les tôles de l'inducteur soit par une barre amortisseur par exemple en
aluminium, soit par un cordon de soudure placés sur la
tranche des tôles feuilletées, dans la zone de mise en
place des spires de court-circuit 15.

Dans l'exemple représenté, le stator comporte
vingt quatre encoches 8 dont seize sont occupées par les
conducteurs de l'enroulement principal 1 et huit par les
conducteurs de l'enroulement auxiliaire 2.

11

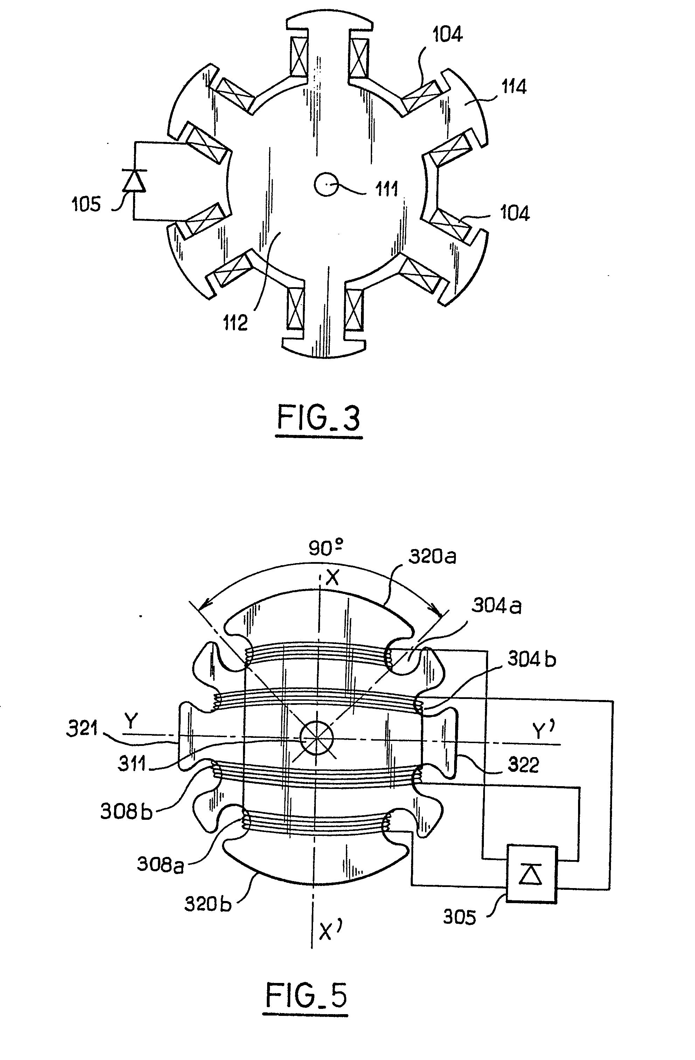

Dans l'exemple décrit le rotor comporte une paire de pôles mais il est bien évident que le dispositif selon l'invention s'applique à des alternateurs munis de deux paires de pôles ou plus. Ainsi, un alternateur muni de 6 pôles saillants également répartis angulairement a été représenté à la figure 3 (pour n = 1 000 t/minute, f = 50 Hertz). Chaque pôle 114 comporte une bobine 104 et l'inducteur dispose donc de six bobines 104. Dans ce cas on peut réaliser le bobinage rotorique en mettant les six bobinages en série avec une seule diode 105 comme représenté sur la figure 3. On peut encore, en fonction de la tension dans l'inducteur diviser l'inducteur en deux ensembles de trois bobinages en série chacun refermé sur une diode, ou plus. Ceci afin de ne pas dépasser la tension supportée par les diodes.

Dans tous ces cas les bobinages statoriques présentent une configuration analogue à l'exemple décrit en référence à la figure 1.

La disposition des bobines de l'inducteur peut être variée, la meilleure disposition étant celle qui permet de recueillir au maximum les effets du champ inverse. Pour cela il est intéressant :

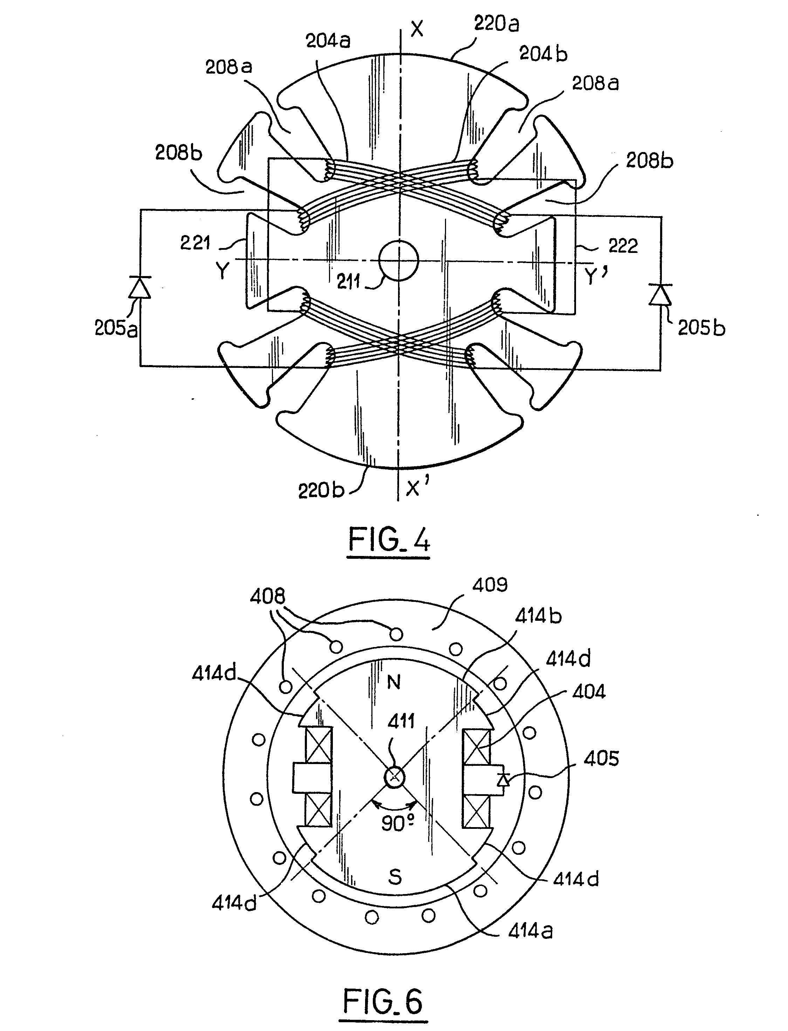

- de placer sur chaque pôle ou tête de bobine de l'inducteur deux bobinages croisés faisant un angle le plus proche possible de la quadrature magnétique (figure 4);

- de redresser les deux alternances du courant induit par les champs inverses recueilli sur un premier bobinage embrassant sensiblement le demi-pas polaire à travers un pont redresseur et de réinjecter le courant ainsi redressé dans un second bobinage embrassant un arc polaire plus important (figure 5);

- d'augmenter la largeur de l'entrefer dans la zone de l'arc polaire extérieure au demi-pas polaire (figure 6).

Ces diverses variantes sont décrites ci-après.

12

A la figure 4 on a représenté une roue polaire munie de deux pôles ou têtes de bobine 220a , 220b couvrant un arc polaire d'environ 90° électrique (voisine du demi-pas polaire) et des parties latérales droites 221, 222.

Cette roue polaire présente deux plans axiaux de symétrie XX' et YY' perpendiculaires entre eux. Dans la roue polaire on a découpé quatre encoches externes 208a et quatre encoches internes 208b qui sont plus proches du plan YY' que les encoches externes . Chaque tête de bobine 220a, 220b porte deux enroulements 204a, 204b qui sont bobinés d'une encoche 208a située d'un côté du plan XX' à une encoche 208b située de l'autre côté de ce plan, et réciproquement de façon que chaque tête de bobine porte deux bobinages 204a, 204b croisés.

Les bobinages 204a, 204b présentent ainsi des spires faisant entre elles un angle qu'il est intéressant de rendre le plus voisin possible de 90° de façon à récupérer le maximum de flux inverse. Cette disposition permet d'une part d'étouffer le champ de fréquence double (100 Hz lorsqu'on produit du 50 Hz) sur un angle plus important et d'autre part de faire une addition algébrique des champs magnétiques après redressement au lieu de les additionner vectoriellement comme cela se produit lorsque les bobinages sont parallèles entre eux. Ceci permet de récupérer un courant d'excitation plus important qui serait maximal si les axes des enroulements étaient perpendiculaires. Cette variante permet corrélativement d'utiliser un condensateur 3 un peu plus faible dans l'enroulement statorique auxiliaire 2.

A la figure 5 on a représenté une autre variante de réalisation dans laquelle la roue polaire présente une forme et des encoches analogues à celles de la figure 4.

13

Les références des éléments homologues ont été augmentées de 100. Toutefois les deux bobinages 308$\underline{a}$, 308$\underline{b}$ de chaque tête de bobine sont cette fois situés dans des plans parallèles au plan YY' par rapport auquel l'une des têtes est le symétrique de l'autre.

Les enroulements 304$\underline{a}$ de chacune des têtes de bobine 320$\underline{a}$, 320$\underline{b}$ correspondant aux encoches externes sont connectés en série et se referment sur une branche d'un pont de redresseurs à quatre diodes symbolisé en 305. De même les enroulements 304$\underline{b}$ correspondant aux encoches internes connectés en série se referment sur l'autre branche du pont de redresseurs 305. Ainsi la tension alternative recueillie aux bornes des enroulements externes 304$\underline{a}$ est redressée par le pont 305, puis le courant redressé est réinjecté dans les enroulements internes 304$\underline{b}$.

Cette disposition permet de couvrir un arc polaire présentant un angle électrique supérieur à 90° et on obtient ainsi un courant d'excitation plus important. De plus, grâce à cette disposition, la tension fournie par l'alternateur présente une forme d'onde plus proche d'une sinusoïde.

Dans le mode de réalisation de la figure 6, on agit cette fois sur l'entrefer de l'alternateur pour chercher à recueillir au maximum le champ inverse. Dans les constructions habituelles l'arc polaire est de l'ordre des 2/3 du pas polaire. Or il est intéressant comme l'on a à redresser une fréquence double de celle produite par l'alternateur (100 Hz dans le cas du 50 Hz) de rendre l'arc polaire sensiblement égal à la moitié du pas polaire.

C'est ce qui a été réalisé sur la roue polaire de la figure 6 sur laquelle les éléments homologues à ceux de la figure 1 portent des références augmentées de 400. Les entrefers ont été augmentés en 414$\underline{d}$ de chaque côté

14

de la zone de l'arc polaire correspondant à un angle électrique de 90° pour créer des entrefers additionnels dans la région des cornesdes épanouissements polaires 414a et 414b.

L'alternateur de l'invention peut encore trouver une application particulière comme génératrice de courant pour le soudage électrique. Dans ce cas il est intéressant de disposer d'une machine ayant un fort statisme de tension. Ceci est réalisé en accentuant une disposition qui a déjà été décrite pour un effet limité analogue en référence à la figure 1, à savoir mettre une partie importante des bobines 4 en court-circuit de façon à avoir une tension chutant très sensiblement en fonction de la charge.

On notera que dans toutes ces variantes le stator présente une disposition analogue à celle de la figure 1.

15

REVENDICATIONS

1. Alternateur monophasé (10) comprenant un inducteur tournant muni d'au moins un bobinage (4), des moyens pour alimenter le bobinage de l'inducteur en courant d'excitation, un stator comportant au moins un enroulement principal (1), caractérisé en ce que le circuit magnétique de l'inducteur comprend des tôles minces (13) en matériau ferro-magnétique, isolées, serrées les unes contre les autres et bloquées sur l'arbre (11) de l'inducteur pour former suivant des directions radiales par rapport audit arbre au moins une paire de pôles (14a, 14b) que l'on a initialement magnétisés pour en faire un pôle Nord et un pôle Sud, en ce qu'entre les bornes (5a, 5b) du bobinage de l'inducteur (4) est connecté un élement (5) assurant la conduction uniquement dans le sens procurant un champ correspondant à la magnétisation initiale, et en ce que les moyens pour alimenter l'inducteur en courant d'excitation comprennent un enroulement statorique auxiliaire (2) dont l'axe magnétique fait un angle avec celui de l'enroulement principal (1), et qui est fermé sur une charge au moins partiellement capacitive (3)

2. Alternateur selon la revendication 1, caractérisé en ce que la charge au moins partiellement capacitive est un condensateur (3).

3. Alternateur monophasé selon la revendication 2, caractérisé en ce que la réactance de la charge capacitive (3) est supérieure à la réactance synchrone totale de l'enroulement (2) aux bornes duquel elle est connectée.

4. Alternateur monophasé selon l'un des revendications 1 à 3, caractérisé en ce que les axes des enroulements statoriques (1, 2) sont sensiblement perpendiculaires.

5. Alternateur monophasé selon l'une des revendications 1 à 4, caractérisé en ce qu'en vue de donner un

16

certain statisme à cet alternateur, on aménage des spires en court-circuit (15) sur l'inducteur et/ou on relie certaines au moins des tôles rotoriques (13) par un cordon de soudure.

6. Alternateur monophasé selon l'une des revendications 1 à 5, caractérisé en ce que chaque pôle (320a, 320b) de l'inducteur comporte deux bobinages l'un externe (308a) éloigné de l'axe (311) du rotor et couvrant un arc correspondant sensiblement au demi-pas polaire, l'autre interne (308b) plus proche de l'axe (311) et couvrant un arc plus important, les deux bobinages internes (308b) étant alimentés en courant fourni par un pont redresseur (305) alimenté par les deux bobinages externes (308a).

7. Alternateur monophasé selon l'une des revendications 1 à 5, caractérisé en ce que chaque pôle (220a, 220b) de l'inducteur comporte deux bobinages (204a, 204b) croisés.

8. Alternateur monophasé selon la revendication 7, caractérisé en ce que les axes des bobinages (204a, 204b) de chaque pôle font entre eux un angle sensiblement égal à 90°.

9. Alternateur monophasé selon l'une des revendications 1 à 8, caractérisé en ce que l'inducteur comporte plusieurs paires de pôles (114) et des bobinages (104) montés en série en un circuit refermé sur un élément de conduction unidirectionnel (105) chaque pôle (114) étant muni de l'un des bobinages précités.

10. Alternateur monophasé selon la revendication 9, caractérisé en ce que l'inducteur comporte plusieurs circuits distincts dans chacun desquels il y a un montage en série d'au moins un bobinage (104) et d'une diode (105).

0085619

FIG.1

FIG.2

## FIG.3

## FIG.5

0085619

FIG. 4

FIG. 6